# EUROPEAN PATENT SPECIFICATION

(11) **EP 1 378 163 B1**
(45) Date of publication and mention of the grant of the patent: **15.08.2007**
(21) Application number: 03076626.5
(22) Date of filing: 28.05.2003
(51) Int. Cl.: A01J 5/04, A01J 5/017

(54) **A device for milking an animal**
Vorrichtung zum Melken eines Tieres
Dispositif de traite d'un animal

(30) Priority: 05.07.2002 NL 1021014
(43) Date of publication of application: 07.01.2004
(73) Proprietor: Lely Enterprises AG, 6300 ZUG (CH)
(72) Inventor: van den Berg, Karel, 2971 BR Bleskensgraaf (NL); Fransen, Renatus Ignatius Josephus, 3135 ZD Vlaardingen (NL); van Liere, Martinus Hubrecht, 3142 LJ Maassluis (NL)
(74) Representative: Corten, Maurice Jean F.M.

(56) References cited:
- EP-A- 0 647 392
- EP-A- 0 801 892

## Description

The invention relates to a device for milking an animal, such as a cow, according to the preamble of claim 1.

Such a device is generally known.

It is an object of the present invention to provide an alternative device.

According to the invention, for this purpose a device for milking an animal, such as a cow, of the above-mentioned type comprises the features of the characterizing part of claim 1. Due to the fact that the mounting block is used, it is possible to obtain an extremely compact device. In the case that the device comprises a robot arm for automatically connecting the teat cup, the mounting block is capable of detachably being fastened to the robot arm. Moreover, the device according to the invention makes it possible to set the pulsation per teat.

Favourable embodiments are described in the subclaims.

The invention will be explained hereinafter in further detail with reference to embodiments shown in the drawing, in which:
Figure 1 is a schematic cross-sectional view of a device according to the invention;
Figure 2 is a schematic perspective view of four mounting blocks disposed side by side with units in a device according to the invention;
Figure 3 is a schematic cut-out cross-sectional view of a mounting block and a milking-vacuum-shutting-off device;
Figure 4 is a schematic cross-sectional view of a transition piece;
Figure 5 is a schematic front view of a transition piece;
Figure 6 shows schematically a part of the mounting block with milking-vacuum-shutting-off valve and pulsator;
Figure 7 is a schematic perspective view of a pulsator;
Figure 8 is a schematic plan view of a controllable aperture;
Figure 9 shows an alternative embodiment of a device according to the invention, and
Figure 10 is a schematic perspective view of a mounting block of a device according to the invention.

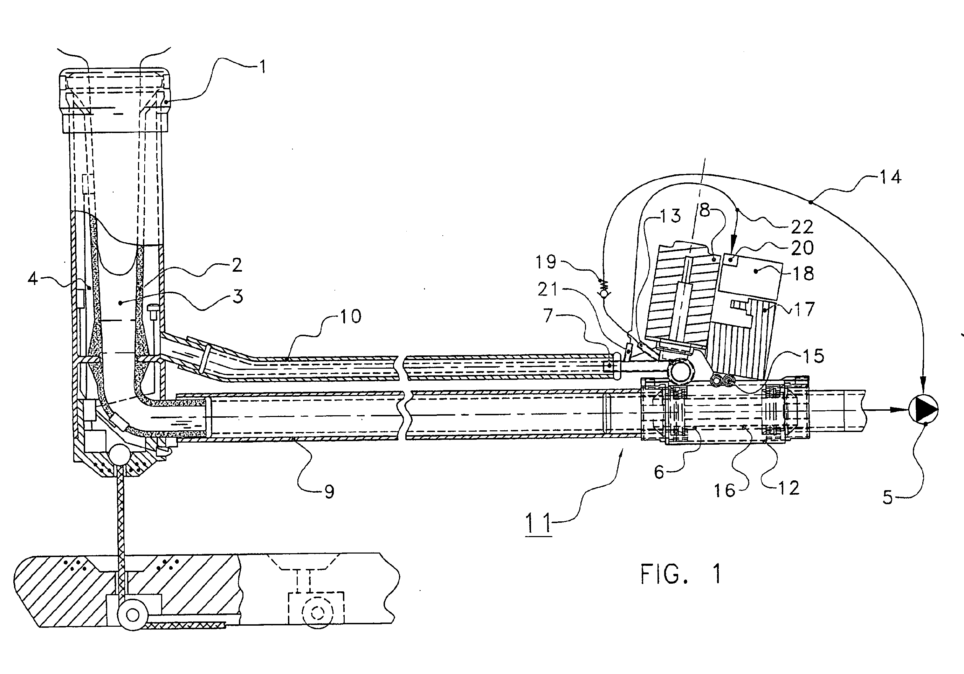

The invention relates to a device for milking an animal, such as a cow, a part of which device is shown in a schematic cross-sectional view in Figure 1. The device is provided with a teat cup 1 to be connected to a teat of the animal. The teat cup 1 has a liner 2 that divides the teat cup 1 into a teat space 3 and a pulsation space 4.

A milking vacuum unit, comprising a milking vacuum source 5 and a milking-vacuum-shutting-off device 6 for shutting off the teat cup 1 from the milking vacuum, applies a milking vacuum in the teat space 3. For this purpose the milking-vacuum-shutting-off device 6 can be connected to the teat space 3 via a milking vacuum hose 9.

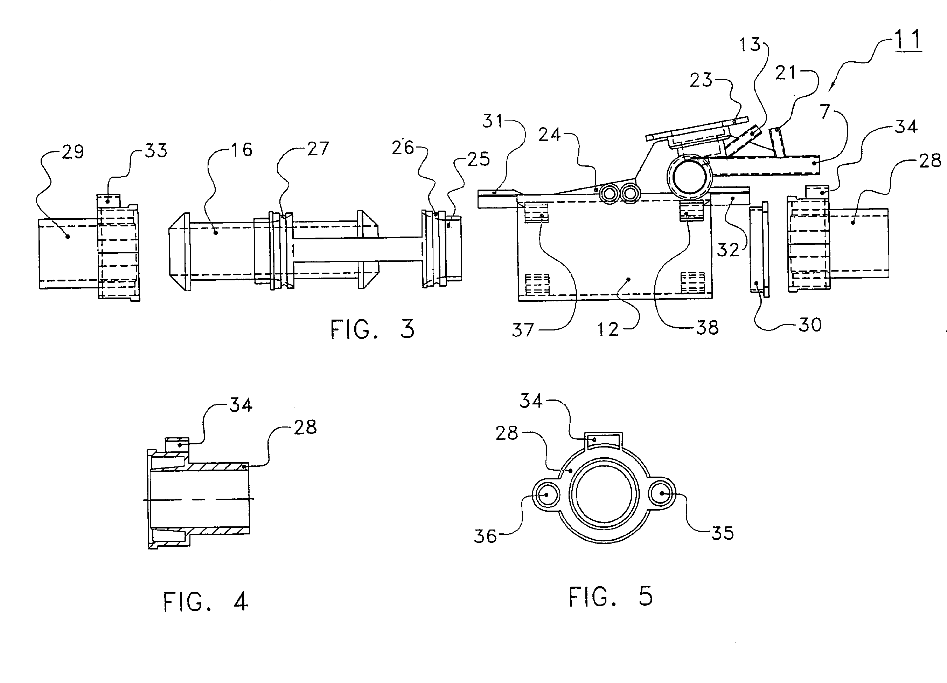

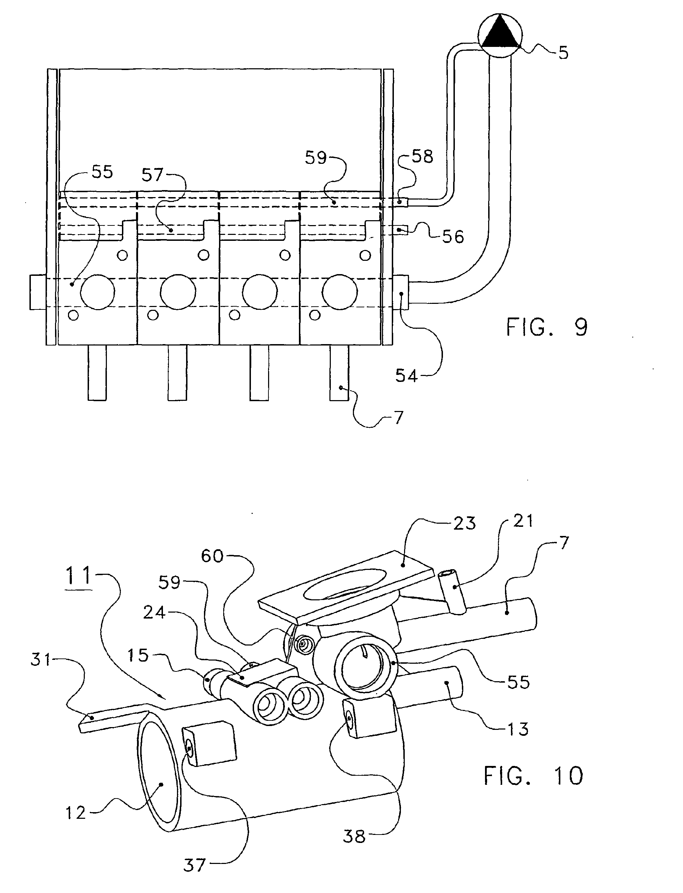

The device comprises a mounting block 11 (see also Figures 3 and 10) that comprises the pulse line portion 7 and a first fastening portion 12 for detachably fastening the milking-vacuum-shutting-off device 6. The mounting block 11 is preferably made of one piece of synthetic material. The mounting block 11 is provided with a milking vacuum connection 13 for the milking vacuum source 5. For this purpose the milking vacuum connection 13 can be connected to the vacuum source 5 via a vacuum source hose 14. The mounting block 11 further comprises a compressed air connection 15 for a (non-shown) compressed air source.

In the embodiment shown the milking-vacuum-shutting-off device 6 comprises a hose portion 16 that can be included in the first fastening portion 12, in this embodiment a tube portion. When the hose portion 16 is open, the teat space 3 is connected to the milking vacuum source 5. When the hose portion 16 is closed, the teat space 3 is disconnected from the milking vacuum source 5, in which case the teat cup 1 is disconnected from the relevant teat of the animal. The opening and closing of the hose portion 16 is controlled by a controlled milking-vacuum-shutting-off valve 17. Said milking-vacuum-shutting-off valve 17 (for example a 3/2 valve, such as the valve P2E-KV32C obtainable with Parker) is controlled by a control-unit 18 for controlling at least a part of the device. Said control-unit 18 is detachably fastened to the mounting block. The milking-vacuum-shutting-off valve 17 thus ensures either the connection of the interior of the tube portion to the milking vacuum connection or the connection of the interior of the tube portion to the compressed air connection. For this purpose the mounting block 11 is provided with a first borehole connecting the interior of the tube portion to the milking vacuum connection and a second borehole connecting the interior of the tube portion to the compressed air connection.

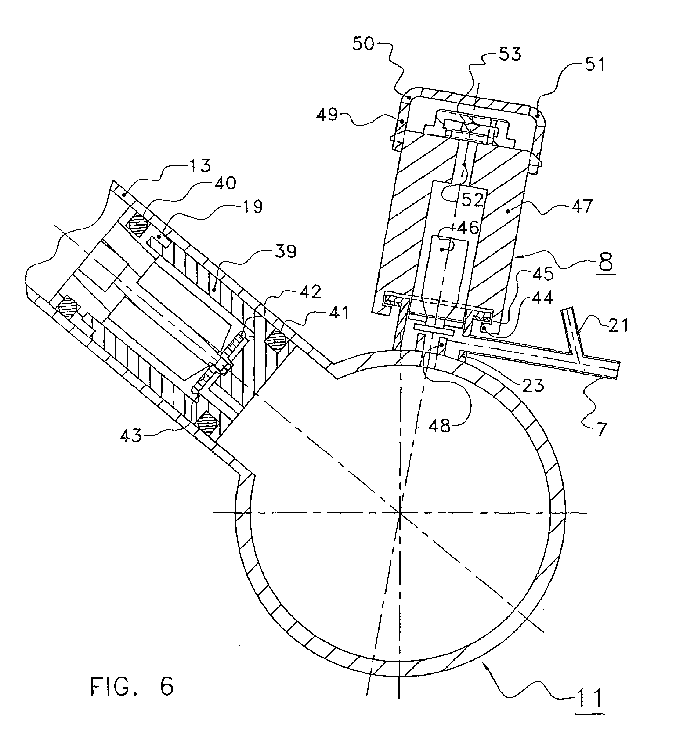

In the connection 13 for the milking vacuum source 5 there is disposed a non-return valve 19 for preventing disturbance of the different pressures. For the sake of simplicity of the drawing, in Figure 1 the non-return valve 19 is shown in the vacuum source hose 14, which is a possible, but not preferred position. The non-return valve will be set out in further detail hereinafter (Figure 6).

A pulsation-vacuum-unit, comprising a pulse line portion 7 and a pulsator 8, is suitable for alternately applying a pulsation vacuum and, for example, an atmospheric pressure in the pulsation space 4. For this purpose the pulse line portion 7 can be connected to the pulsation space 4 via a pulse hose 10. For the purpose of measuring the pressure in the pulsation space 4, for example for checking the pulsation curve, and controlling the pulsation pressure, possibly on the basis of the measured value, the device is provided with a pressure sensor 20 for measuring the pressure in the pulse line portion 7. The pressure sensor 20 is preferably included in the control-unit 18, and is therefore detachably fastened to the mounting block. For the connection of the pulse line portion 7 to the pressure sensor 20, the pulse line portion 7 is provided with a sensor connection 21 that is connected to the pressure sensor 20 via a sensor hose 22.

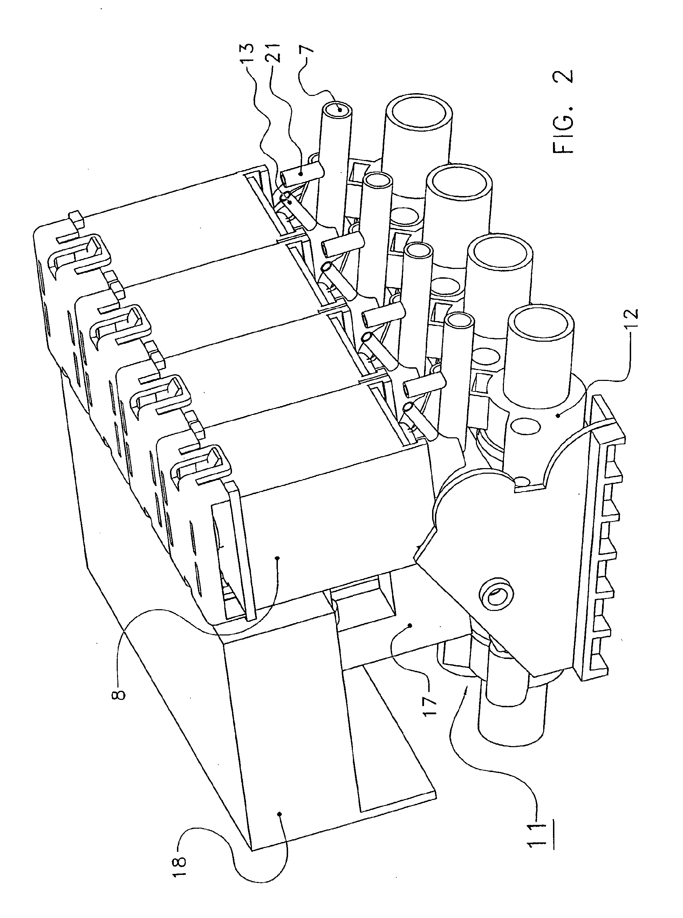

Although the invention may be applied to one teat cup, there are preferably applied at least two teat cups, each provided with an associated mounting block. In that case the mounting blocks are preferably detachably fastened to each other. Figure 2 shows schematically in a perspective view the mounting blocks 11 including the pulsator 8, the first fastening portion 12, the milking vacuum connection 13, the controlled milking-vacuum-shutting-off valve 17, the control-unit 18 and the sensor connection 21, for four separate teat cups. As is apparent from the drawing, the construction of the entire unit is very compact, while, if the device is provided with a robot arm for automatically connecting the teat cups, the entire unit is capable of detachably being fastened to the robot arm.

Figure 3 shows schematically in side view a cut-out mounting block 11 with the hose portion 16. The mounting block 11 has a second fastening portion 23 for the purpose of detachably fastening the pulsator thereto. It is further visible that the mounting block 11 is provided with a third fastening portion 24 for the purpose of detachably fastening thereto the milking-vacuum-shutting-off valve. The first fastening portion 12 is a tube portion in which a cage construction 25 can be included in an accurately fitting manner. The cage construction 25 is provided near its ends with grooves 26, 27 for receiving O-rings so that a proper sealing against the inner wall of the first fastening portion 12 can be obtained. The hose portion 16 is shifted into the cage construction 25, in such a way that on both ends a part of the hose portion 16 still projects outside the cage construction. On these two ends of the hose portion 16 two transition pieces 28, 29 are shifted, while using an intermediate ring 30, if desired. In Figures 4 and 5 such a transition piece 28 is shown in a cross-sectional view, respectively a front view.

For the purpose of locking the transition pieces 28, 29 against undesired rotation, the mounting block 11 is provided with protrusions 31, 32 that are capable of engaging recesses 33, 34 of the transition pieces. Such a locking of a transition piece against rotation is extremely advantageous if the transition piece is provided with sensors or detectors for measuring particular milk properties. Such sensors or detectors are preferably embedded in the transition piece which, in that case, is preferably made of synthetic material. For the detachable fastening of the transition pieces, the cage construction and the hose portion, bolts can be inserted into bolt apertures 35, 36, 37, 38 of the transition pieces or the mounting block. The transition pieces are provided with connecting elements on their side that is faced away from the cage construction.

Figure 6 shows schematically a part of the mounting block 11 in a cross-sectional view (not to scale). Figure 6 shows the non-return valve 19 in the milking vacuum connection 13 and the pulsator 8 disposed on the second fastening portion 23. For the sake of simplicity of the drawing, the cross-sections of the components are depicted in one plane, but, as is apparent for example from Figure 2, the components are located at some distance from each other.

The non-return valve 19 comprises a casing 39 that is inserted in the milking vacuum connection 13 by means of O-rings 40, 41. The casing 39 comprises a valve 42 and a ring-shaped stop 43 against which the valve 42 can abut in a sealing manner, i.e. in a direction from the milking vacuum connection 13 to the mounting block 11. It will be obvious that instead of a valve other shutting off means, such as for example a ball or the like, can be used as well.

In the embodiment shown the pulsator 8 is provided with an inwardly projecting edge 44 that engages the second fastening portion 23 in a surrounding manner. By interposing a fitting slide 45, the pulsator 8 can detachably be fastened to the mounting block 11. The pulsator 8 comprises a plunger 46 that is movable in a reciprocating manner by means of a magnet 47. In dependence on the control, the plunger 46 is movable until it comes into contact with the stop element 48. The movement takes place in a plunger space that communicates with the atmospheric air via a borehole 52. The pulsator 8 is provided with a cover 49 with apertures 50, 51 that surrounds the free end of the borehole 52. Said free end of the borehole 52 is provided with a controllable aperture for being able to set the so-called C-phase of the pulsation curve. A filter may be included in the cover, if desired.

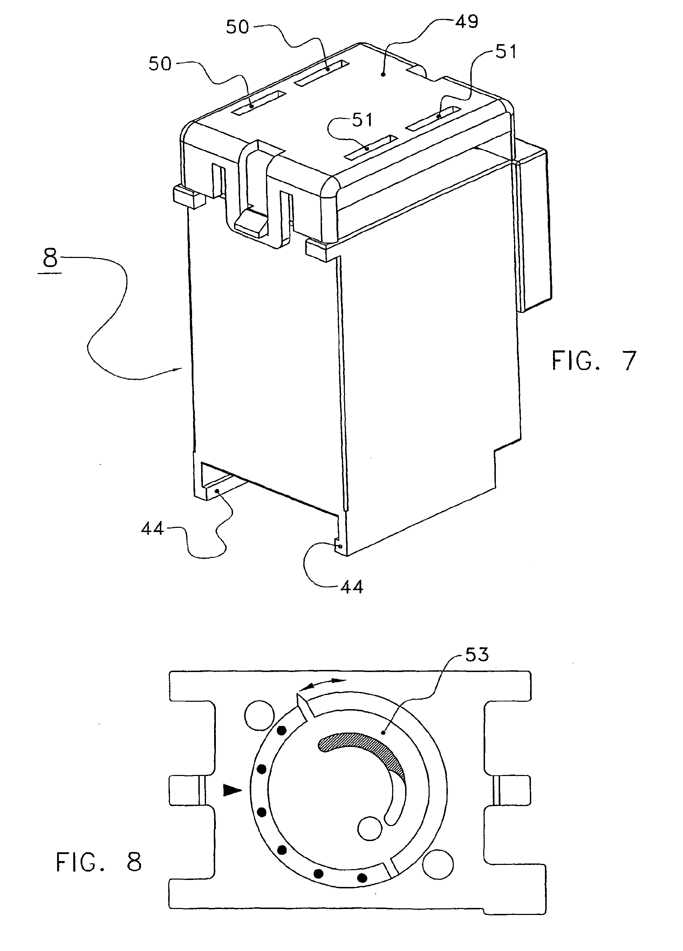

The pulsator 8 is schematically shown in a perspective view in Figure 7, whereas an embodiment of a controllable aperture 53 is shown in Figure 8, the size of the aperture being controllable by rotation in the direction of the arrow.

Although there may be provided one separate milking vacuum connection 13 and one separate compressed air connection 15 per mounting block, in some cases it is advantageous if the milking vacuum connections of the mounting blocks are inter-connectable by means of a common milking vacuum connection 54 as shown in Figure 9. In this case each of the mounting blocks has a milking-vacuum-borehole-portion 55 having at its end a milking vacuum connection for being connected to the milking-vacuum-borehole-portion of the adjacent mounting block. Moreover, in an analogous manner, it is possible to realise a common compressed air connection 56, in that each mounting block comprises a compressed-air-borehole-portion 57 and associated compressed air connections that are disposed in line in a position in which the mounting blocks are fastened to each other. If desired, in an analogous manner, in each mounting block there may be provided an extra common milking vacuum connection 58 and an extra milking-vacuum-borehole-portion 59, for the purpose of preventing possible fluctuations in the milking vacuum controlled by the milking-vacuum-shutting-off valve.

Figure 10 shows the mounting block 11 in a perspective view. Said figure shows a borehole 60 for receiving a fastening bolt for inter-connecting mounting blocks. It is pointed out here that the milking-vacuum-borehole-portion 55 can be closed.

Because of the fact that the milking process by means of a pulsation vacuum and a milking vacuum is known per se, said process is not set out here in further detail for the sake of simplicity of the description. It will be obvious that, in their assembled position, the relevant components are inter-connected in such a way that a customary procedure can be realised. Because of the use of the mounting block and the modular construction, there is achieved a construction which is not only compact but which enables maintenance and repair, if required, to be carried out in a simple manner.

## Claims

1. A device for milking an animal, such as a cow, which device is provided with a teat cup (1) to be connected to a teat of the animal, the teat cup (1) having a liner that divides the teat cup (1) into a teat space (3) and a pulsation space (4), with a milking-vacuum-unit for applying a milking vacuum in the teat space (3), the milking-vacuum-unit comprising a milking vacuum source (15) and a milking-vacuum-shutting-off device (6) for shutting off the teat cup (1) from the milking vacuum, and with a pulsation-vacuum-unit for applying a pulsation vacuum in the pulsation space (4), the pulsation-vacuum-unit comprising a pulse line portion (7) and a pulsator (8), **characterized in that** the device comprises a mounting block (11), the mounting block (11) comprising the pulse line portion (7) and the mounting block (11) being provided with a first fastening portion (12) for detachably fastening the milking-vacuum-shutting-off device (6) and with a second fastening portion (23) for detachably fastening the pulsator (8).

2. A device as claimed in claim 1, **characterized in that** the mounting block (1) is provided with a milking vacuum connection (13) for the milking vacuum source.

3. A device as claimed in claim 2, **characterized in that** the mounting block (1) is provided with a non-return valve (19) that is disposed in the connection for the milking vacuum source.

4. A device as claimed in claim 1, 2 or 3, **characterized in that** the mounting block is provided with a compressed air connection for a compressed air source.

5. A device as claimed in claim 4, **characterized in that** the milking-vacuum-shutting-off device comprises a hose portion.

6. A device as claimed in claim 5, **characterized in that** the first fastening portion for the milking-vacuum-shutting-off device comprises a tube portion that is suitable for receiving the hose portion.

7. A device as claimed in claim 6, **characterized in that** the mounting block is provided with a first borehole connecting the interior of the tube portion to a vacuum source, in particular the milking vacuum connection, and with a second borehole connecting the interior of the tube portion to the compressed air connection.

8. A device as claimed in 7, **characterized in that** the device is provided with a controlled milking-vacuum-shutting-off valve for connecting the interior of the tube portion to the vacuum source, in particular the milking vacuum connection, or to the compressed air connection.

9. A device as claimed in claim 8, **characterized in that** the mounting block is provided with a third fastening portion for detachably fastening the milking-vacuum-shutting-off valve.

10. A device as claimed in any one of the preceding claims, **characterized in that** the device is provided with a pressure sensor for measuring the pressure in the pulse line portion.

11. A device as claimed in claim 10, **characterized in that** the pressure sensor can detachably be fastened to the mounting block.

12. A device as claimed in any one of the preceding claims, **characterized in that** the device is provided with a control-unit for controlling at least a part of the device, the control-unit being capable of detachably being fastened to the mounting block.

13. A device as claimed in any one of the preceding claims, **characterized in that** the mounting block is made of synthetic material.

14. A device as claimed in any one of the preceding claims, **characterized in that** the device comprises at least two teat cups, each teat cup comprising an associated mounting block.

15. A device as claimed in claim 14, **characterized in that** the mounting blocks can detachably be fastened to each other.

16. A device as claimed in claim 14 or 15 with reference to claim 2, **characterized in that** in the fastened position the milking vacuum connections of all the mounting blocks are in communication with each other.

17. A device as claimed in claim 14, 15 or 16 with reference to claim 4, **characterized in that** in the fastened position the compressed air connections of all the mounting blocks are in communication with each other.

18. A device as claimed in any one of the preceding claims, **characterized in that** the device is provided with a robot arm for automatically connecting the teat cup, a mounting block being capable of detachably being fastened to the robot arm.

## Patentansprüche

1. Vorrichtung zum Melken eines Tieres, wie z. B. einer Kuh, wobei die Vorrichtung versehen ist mit einem an eine Zitze des Tieres anzuschließenden Zitzenbecher (1), wobei der Zitzenbecher (1) eine Auskleidung aufweist, die den Zitzenbecher (1) in einen Zitzenraum (3) und einen Pulsierraum (4) unterteilt, mit einer Melkvakuumeinheit zum Erzeugen eines Melkvakuums in dem Zitzenraum (3), wobei die Melkvakuumeinheit eine Melkvakuumquelle (5) und eine Melkvakuum-Trennvorrichtung (6) aufweist, um den Zitzenbecher (1) vom Melkvakuum zu trennen, und mit einer Pulsiervakuumeinheit zum Erzeugen eines Pulsiervakuums in dem Pulsierraum (4), wobei die Pulsiervakuumeinheit einen Pulsierleitungsabschnitt (7) und einen Pulsator (8) umfasst,
**dadurch gekennzeichnet, dass** die Vorrichtung einen Montageblock (11) umfasst, wobei der Montageblock (11) den Pulsierleitungsabschnitt (7) umfasst und der Montageblock (11) mit einem ersten Befestigungsabschnitt (12) zur lösbaren Befestigung der Melkvakuum-Trennvorrichtung (6) und mit einem zweiten Befestigungsabschnitt (23) zur lösbaren Befestigung des Pulsators (8) versehen ist.

2. Vorrichtung nach Anspruch 1,
**dadurch gekennzeichnet, dass** der Montageblock (1) mit einem Melkvakuumanschluss (13) für die Melkvakuumquelle versehen ist.

3. Vorrichtung nach Anspruch 2,
**dadurch gekennzeichnet, dass** der Montageblock (1) mit einem Rückschlagventil (19) versehen ist, das in der Leitung der Melkvakuumquelle angeordnet ist.

4. Vorrichtung nach Anspruch 1, 2 oder 3,
**dadurch gekennzeichnet, dass** der Montageblock mit einem Druckluftanschluss für eine Druckluftquelle versehen ist.

5. Vorrichtung nach Anspruch 4,
**dadurch gekennzeichnet, dass** die Melkvakuum-Trennvorrichtung einen Leitungsabschnitt umfasst.

6. Vorrichtung nach Anspruch 5,
**dadurch gekennzeichnet, dass** der erste Befestigungsabschnitt für die Melkvakuum-Trennvorrichtung einen Rohrabschnitt umfasst, der geeignet ist, den Leitungsabschnitt aufzunehmen.

7. Vorrichtung nach Anspruch 6,
**dadurch gekennzeichnet, dass** der Montageblock mit einer ersten Bohrung versehen ist, die das Innere des Rohrabschnittes mit einer Vakuumquelle, insbesondere dem Melkvakuumanschluss, verbindet, sowie mit einer zweiten Bohrung, die das Innere des Rohrabschnittes mit dem Druckluftanschluss verbindet.

8. Vorrichtung nach Anspruch 7,
**dadurch gekennzeichnet, dass** die Vorrichtung mit einem gesteuerten Melkvakuum-Absperrventil versehen ist, um das Innere des Rohrabschnittes mit der Vakuumquelle, insbesondere dem Melkvakuumanschluss, oder mit dem Druckluftanschluss zu verbinden.

9. Vorrichtung nach Anspruch 8,
**dadurch gekennzeichnet, dass** der Montageblock mit einem dritten Befestigungsabschnitt versehen ist, um das Melkvakuum-Absperrventil lösbar zu befestigen.

10. Vorrichtung nach einem der vorhergehenden Ansprüche,
**dadurch gekennzeichnet, dass** die Vorrichtung mit einem Drucksensor zum Messen des Druckes in dem Pulsierleitungsabschnitt versehen ist.

11. Vorrichtung nach Anspruch 10,
**dadurch gekennzeichnet, dass** der Drucksensor an dem Montageblock lösbar befestigt werden kann.

12. Vorrichtung nach einem der vorhergehenden Ansprüche,
**dadurch gekennzeichnet, dass** die Vorrichtung mit einer Steuereinheit zum Steuern zumindest eines Teiles der Vorrichtung versehen ist, wobei die Steuereinheit an dem Montageblock lösbar zu befestigen ist.

13. Vorrichtung nach einem der vorhergehenden Ansprüche,
**dadurch gekennzeichnet, dass** der Montageblock aus Kunststoff hergestellt ist.

14. Vorrichtung nach einem der vorhergehenden Ansprüche,
**dadurch gekennzeichnet, dass** die Vorrichtung mindestens zwei Zitzenbecher umfasst, wobei jeder Zitzenbecher einen zugehörigen Montageblock umfasst.

15. Vorrichtung nach Anspruch 14,
**dadurch gekennzeichnet, dass** die Montageblöcke lösbar aneinander zu befestigen sind.

16. Vorrichtung nach Anspruch 14 oder 15 unter Rückbezug auf Anspruch 2,
**dadurch gekennzeichnet, dass** in der Befestigungsposition die Melkvakuumanschlüsse aller Montageblöcke miteinander in Verbindung stehen.

17. Vorrichtung nach Anspruch 14, 15 oder 16 unter Rückbezug auf Anspruch 4,
**dadurch gekennzeichnet, dass** in der Befestigungsposition die Druckluftanschlüsse aller Montageblöcke miteinander in Verbindung stehen.

18. Vorrichtung nach einem der vorhergehenden Ansprüche,
**dadurch gekennzeichnet, dass** die Vorrichtung mit einem Roboterarm zum automatischen Anschließen des Zitzenbechers versehen ist, wobei ein Montageblock lösbar an dem Roboterarm zu befestigen ist.

## Revendications

1. Dispositif de traite d'un animal, tel qu'une vache, lequel dispositif est pourvu d'un gobelet trayeur (1) à raccorder à un trayon de l'animal, ledit gobelet trayeur (1) présentant un manchon qui divise le gobelet trayeur (1) en un espace pour trayon (3) et un espace de pulsation (4), d'une unité de vide de traite pour appliquer un vide de traite dans l'espace pour trayon (3), ladite unité de vide de traite comprenant une source de vide de traite (5) et un dispositif de d'interruption du vide de traite (6) pour interrompre le vide de traite dans le gobelet trayeur (1), et d'une unité de vide de pulsation pour appliquer un vide de pulsation dans l'espace de pulsation (4), l'unité de vide de pulsation comprenant une partie de conduite de pulsation (7) et un pulsateur (8), **caractérisé en ce que** le dispositif comprend un bloc de montage (11), ledit bloc de montage (11) comprenant la partie de conduite de pulsation (7), et ledit bloc de montage (11) étant pourvu d'une première partie de fixation (12) pour fixer de manière amovible le dispositif d'interruption du vide de traite (6) et d'une seconde partie de fixation (23) pour fixer de manière amovible le pulsateur (8).

2. Dispositif selon la revendication 1, **caractérisé en ce que** le bloc de montage (11) est pourvu d'un raccordement de vide de traite (13) à la source de vide de traite.

3. Dispositif selon la revendication 2, **caractérisé en ce que** le bloc de montage (11) est pourvu d'un clapet anti-retour (18) qui est disposé dans le raccordement à la source de vide de traite.

4. Dispositif selon les revendications 1, 2 ou 3, **caractérisé en ce que** le bloc de montage est pourvu d'un raccordement d'air comprimé à une source d'air comprimé.

5. Dispositif selon la revendication 4, **caractérisé en ce que** le dispositif d'interruption de vide de traite comprend une partie de tuyau.

6. Dispositif selon la revendication 5, **caractérisé en ce que** la première partie de fixation pour le dispositif d'interruption de vide de traite comprend une partie de tube qui est adaptée pour recevoir la partie de tuyau.

7. Dispositif selon la revendication 6, **caractérisé en ce que** le bloc de montage est pourvu d'un premier trou raccordant l'intérieur de la partie de tube à une source de vide, en particulier au raccordement de vide de traite, et d'un second trou raccordant l'intérieur de la partie de tube au raccordement d'air comprimé.

8. Dispositif selon la revendication 7, **caractérisé en ce que** le dispositif est pourvu d'un clapet d'isolation du vide de traite contrôlé pour raccorder l'intérieur de la partie de tube à la source de vide, en particulier au raccordement de vide de traite, ou au raccordement d'air comprimé.

9. Dispositif selon la revendication 8, **caractérisé en ce que** le bloc de montage est pourvu d'une troisième partie de fixation pour fixer de manière amovible le clapet d'isolation du vide de traite.

10. Dispositif selon l'une quelconque des revendications précédentes, **caractérisé en ce que** le dispositif est pourvu d'un capteur de pression pour mesurer la pression dans la partie de conduite de pulsation.

11. Dispositif selon la revendication 10, **caractérisé en ce que** le capteur de pression peut être fixé de manière amovible au bloc de montage.

12. Dispositif selon l'une quelconque des revendications précédentes, **caractérisé en ce que** le dispositif est pourvu d'une unité de contrôle permettant de contrôler au moins une partie du dispositif, ladite unité de contrôle pouvant d'être fixée de manière amovible au bloc de montage.

13. Dispositif selon l'une quelconque des revendications précédentes, **caractérisé en ce que** le bloc de montage est fabriqué à partir d'un matériau synthétique.

14. Dispositif selon l'une quelconque des revendications précédentes, **caractérisé en ce que** le dispositif comprend au moins deux gobelets trayeurs, chaque gobelet trayeur comprenant un bloc de montage associé.

15. Dispositif selon la revendication 14, **caractérisé en ce que** les blocs de montage peuvent être fixés de manière amovible les uns aux autres.

16. Dispositif selon les revendications 14 ou 15 en référence à la revendication 2, **caractérisé en ce que** dans la position fixée les raccordements de vide de traite de tous les blocs de montage sont en communication les uns avec les autres.

17. Dispositif selon les revendications 14, 15 ou 16 en référence à la revendication 4, **caractérisé en ce que** dans la position fixée les raccordements d'air comprimé de tous les blocs de montage sont en communication les uns avec les autres.

18. Dispositif selon l'une quelconque des revendications précédentes, **caractérisé en ce que** le dispositif est pourvu d'un bras robotisé pour raccorder automatiquement le gobelet trayeur, un bloc de montage étant capable d'être fixé de manière amovible au bras robotisé.
